# EUROPEAN PATENT APPLICATION

(11) **EP 3 289 998 A1**
(43) Date of publication of application: **07.03.2018**
(21) Application number: 17001333.8
(22) Date of filing: 03.08.2017
(51) Int. Cl.: A61C 8/00

(54) **ABUTMENT AND DENTAL IMPLANT**

(30) Priority: 31.08.2016 JP 2016169242
(71) Applicant: GC Corporation, Sunto-gun, Shizuoka 410-1307 (JP)
(72) Inventor: Takanohashi, Reo, Tokyo, 174-8585 (JP); Okada, Jyunichi, Tokyo, 174-8585 (JP); Sato, Fumiya, Tokyo, 174-8585 (JP); Ogata, Naoki, Tokyo, 174-8585 (JP); Wako, Yuichi, Tokyo, 174-8585 (JP); Seto, Masaya, Tokyo, 174-8585 (JP)
(74) Representative: Müller-Boré & Partner Patentanwälte PartG mbB

(57) **Abstract**

To provide an abutment having a detent that makes it easy to adjust unsteadiness, an abutment (12) has a tubular shape, one end of which is to be fixed to an implant fixture, and another end of which is to be fixed to a dental prosthesis, wherein a protrusion (14) that is a belt-like protrusion extending in a circumferential direction is formed around an outer circumference of the abutment in a side to be fixed to the dental prosthesis, and a cut portion (14a, 14b) of a smaller protrusion amount is formed on at least each of two regions of the protrusion.

## Description

### Technical Field

The present invention relates to an abutment that is one constituent member of a dental implant, and a dental implant using this abutment.

### Background Art

Dental implant treatment largely spreads as a treatment option when full or partial teeth are lost. Dental implant treatment has many advantages in functionality, aesthetics, operability, and so on. A dental implant used in this treatment includes an abutment that is fitted to an implant fixture (artificial tooth root), which is embedded in a jaw bone, in the intraoral side, and fixed to the implant fixture with a bolt that penetrates through a through hole provided therefor so as to have the same axis as the central axis. A dental prosthesis adheres to be fixed to the implant fixture at an accurate position via this abutment.

Concerning such a dental implant, a dental CAD/CAM system has been employed in recent years for a method of producing more dental prostheses of stable quality for a shorter time while reducing loads of dental technicians. In this dental CAD/CAM system, three-dimensional shape data of a dental prosthesis such as an inlay, a crown, a bridge or a coping is created using a three-dimensional measuring apparatus, a computer, or the like, and the dental prosthesis is produced by cutting a block with an auto-cutting machine based on the three-dimensional shape data of the dental prosthesis.

When a dental prosthesis is produced by this dental CAD/CAM system, a technique other than that for producing an inlay or crown is necessary. That is, a dental prosthesis for a dental implant has to be fixed to an abutment at a position as designed, differently from a dental prosthesis such as an inlay or crown.

Conventionally, a dental prosthesis just has to be produced so as to be externally fittable to an abutment at an accurate position when produced by a dental CAD/CAM system because a metallic dental prosthesis is used, which is not problematic in strength. However, dental prostheses for dental implants have been made of ceramics such as zirconia in recent years in order not to spoil their aesthetic appearances even upon retraction of gingivae after dental implant treatment.

There is a problem that if a ceramic such as zirconia is used for a material of a block, which is a sintered body, this ceramic block is difficult to be formed so as to be externally fittable to an abutment at an accurate position after the sintering because a degree of the compression of the block after the sintering is different depending on a portion of the block. There is another problem that a portion of a ceramic block to be eternally fitted to an abutment might not have enough strength.

In contrast, Patent Literature 1 discloses a coupling body to be used wherein an embedding part of a separate member that is produced in advance so as to form a fitting part to be fit into an implant fixture is embedded in and fixed into an embedding hole that is formed in a block for a dental prosthesis in advance, or shaped when cutting the block to be a dental prosthesis, so that the fitting part to be fit into the implant fixture protrudes.

When a separate member is used as Patent Literature 1, the separate member has to be firmly fixed to the block. For example, it is necessary that the separate member such as an abutment, and the embedding hole that is formed in the block in advance or the like are cut with a high accuracy, and the embedded part of the separate member such as an abutment is inserted into the embedding hole of the block, to firmly adhere and be fixed with dental adhesive etc. This is because damages to the block often cannot be prevented if a recess part provided for the embedding hole of the block is just fit to a protrusion provided for the embedded part of the separate member such as an abutment since the strength of the fitting part might be insufficient in a case where the block is made of a ceramic, such as zirconia.

It is important when such adhesion and fixture are carried out, to surely secure a gap for dental adhesive between the embedding hole formed in the block and the embedded part of an abutment or the like, and to make it possible that a position of the embedded part of the abutment or the like is fixed in the embedding hole of the block. That is, it is necessary to surely form a gap that enables dental adhesive to be a layer of a uniform desired thickness because sufficient adhesive strength cannot be obtained if applied dental adhesive is too thick. However, for example, a cylindrical embedding hole and a columnar embedded part are cut, dental adhesive is applied to the inside face of the embedding hole and the outer circumferential face of the embedded part, and the embedded part is inserted into the embedding hole. Just doing so allows the embedded part of a smaller diameter to freely move in the embedding hole of a larger diameter. Thus, it is very difficult to form a layer of dental adhesive of uniform thickness almost all around the circumference between the inside face of the embedding hole and the outer circumferential face of the embedded part. Therefore, it is necessary to make it possible that a position of the embedded part of abutment or the like is fixed in the embedding hole of the block.

In such a view, Patent Literature 2 discloses a dental abutment whose embedded part is positioned and fixed in an embedding hole of a block, wherein a uniform gap for dental adhesive can be formed along an approximately entire circumference between the outer peripheral surface of the embedded part and the inner surface of the embedding hole of the block. It is described that therefor, the dental abutment is formed by: a gingiva contact part having a forward-thicker truncated conical shape on the intraoral side; a fitting part projecting toward the jawbone side from the jawbone-side contact surface of the gingiva contact part, and fit into an end part on the intraoral side of an implant fixture so as not to rotate; and an embedded part to be embedded in the embedding hole in a ceramic block, and three or more projecting line parts to form the uniform gap for dental adhesive along the approximately entire circumference between the inner surface of the embedding hole of the block and the outer peripheral surface of the embedded part are formed on the outer peripheral surface of the embedded part.

### Citation List

### Patent Literature

Patent Literature 1: JP 2007-222225A
Patent Literature 2: JP 2012-245322A

### Summary of Invention

### Technical Problem

However, in the invention of Patent Literature 2, it is difficult to form three projecting line parts that also function as detents with high accuracy on a dental prosthesis that has a slightly uneven shape, to cause unsteadiness, which is problematic. There is also a problem that adjustment of fitting a dental prosthesis and the abutment takes a lot of effort.

In view of the above problems, an object of the present invention is to provide an abutment having a detent that makes it easy to adjust unsteadiness. Also, a dental implant including this abutment is to be provided.

### Solution to Problem

Hereinafter the present invention will be described. Here, reference numerals added to the drawings are also described in parentheses for easy understanding. However, the present invention is not limited to them.

An aspect of the present invention is an abutment (12) that has a tubular shape, one end of which is to be fixed to an implant fixture (11), and another end of which is to be fixed to a dental prosthesis (21), wherein a protrusion (14) that is a belt-like protrusion extending in a circumferential direction is formed around an outer circumference of the abutment in a side to be fixed to the dental prosthesis, and a cut portion (14a, 14b) of a smaller protrusion amount is formed on at least each of two regions of the protrusion.

A central angle of an inter-part (14d) that is a portion between the cut portions (14a, 14b) adjacent to each other can have a size of no more than 100° on a cross-section orthogonal to an axis of the abutment.

At least three cut portions may be formed.

Such a dental implant (10) can be also provided as to comprise: the above described abutment(12); and a dental prosthesis (21) that has a hole (22) to which the abutment is inserted, wherein protrusion parts (22a, 22b, 22c) with which the cut portions (14a, 14b, 14c) of the abutment are engaged are provided for the hole.

### Advantageous Effects of Invention

According to the present invention, an abutment and a dental prosthesis can be fit without any unsteadiness therebetween by forming cut portions that function as detents, on a belt-like protrusion that forms a gap for inserting adhesive, and by shaving at least one of portions between adjacent cut portions (inter-part) and the cut portions. Therefore, detents that can make it easy to adjust unsteadiness can be achieved.

### Brief Description of Drawings

Fig. 1 is an external view of a dental implant 10.
Fig. 2 is a cross-sectional view of the dental implant 10.
Fig. 3 is an exploded view of the dental implant 10.
Fig. 4 is an explanatory view of a protrusion 14.
Fig. 5 is a partially enlarged view of Fig. 4.
Fig. 6 is an explanatory view of a hole 22.
Fig. 7 is a cross-sectional view of a dental prosthesis 21.
Fig. 8 is another cross-sectional view of the dental prosthesis 21.
Fig. 9(a) shows an example of shaving an inter-part 14d, and Fig. 9(b) shows an example of shaving a first cut portion 14a and a second cut portion 14b.

### Description of Embodiments

Hereinafter embodiments of a dental abutment, and a dental implant including this abutment will be described in more detail with reference to the drawings. The present invention is not limited to these embodiments.

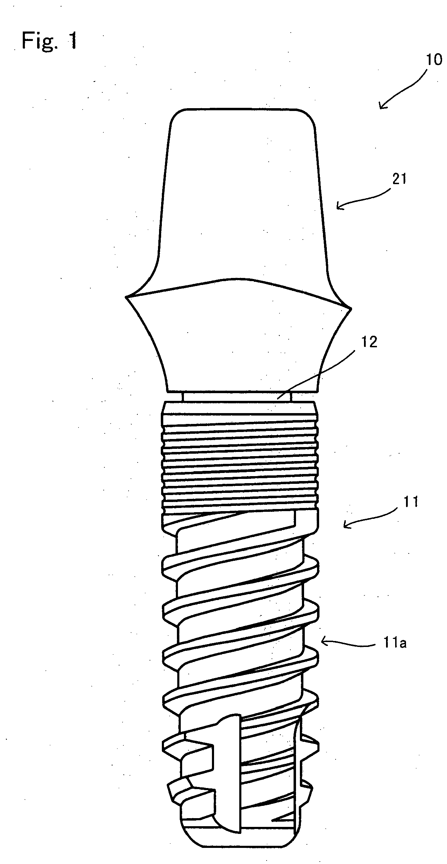

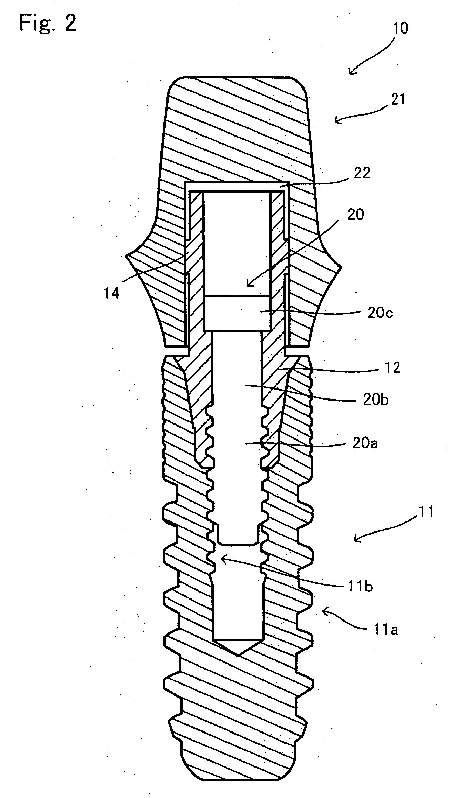

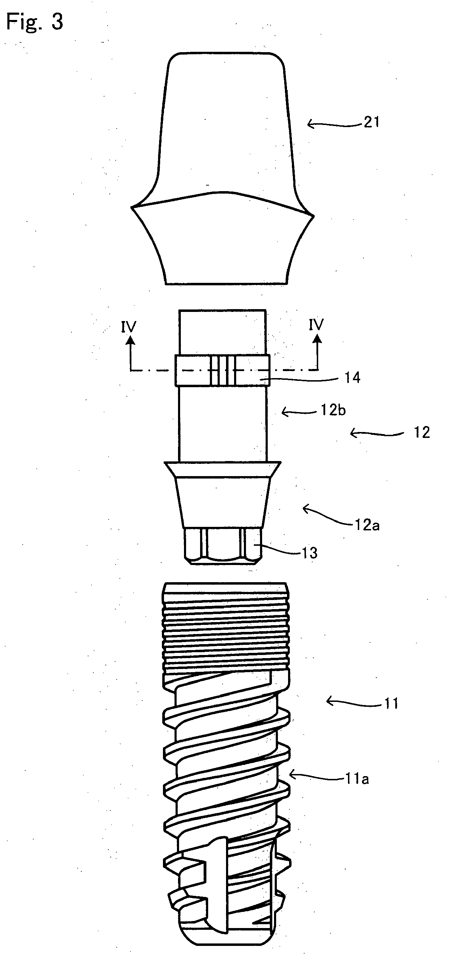

Fig. 1 is an external view of a dental implant 10 according to one embodiment, and Fig. 2 is a cross-sectional view of the dental implant 10. Fig. 3 is an exploded view of the dental implant 10. In Fig. 3, a screw for fastening the abutment 20 is omitted.

As seen from these drawings, the dental implant 10 has an implant fixture 11, an abutment 12, a screw for fastening the abutment 20, and a dental prosthesis 21.

The implant fixture 11 is also called an artificial tooth root or an implant. The implant fixture 11 is a member that is embedded under a part of an alveolar bone which corresponds to a position where a tooth is lost, to be a base for properly fixing whole of the dental implant 10 to the inside of an oral cavity. Here, a known implant fixture can be used as the implant fixture 11.

As seen from Fig. 2, the implant fixture 11 has a tubular shape. A screw-like groove 11a for engaging with a jaw bone is provided for an outer surface of the implant fixture 11. On the other hand, a female screw 11b to which the screw for fastening the abutment 20 is screwed is formed inside the tubular shape of the implant fixture 11.

A jaw bone side of the abutment 12 (lower end side in Fig. 1) is arranged inside the tubular shape of the implant fixture 11, and the dental prosthesis 21 such as an artificial crown is attached to an intraoral side thereof (top end side in Fig. 1). That is, the abutment 12 functions as a member that couples the implant fixture 11 to the dental prosthesis 21.

The abutment 12 has an almost cylindrical tubular body, and is configured so that the screw for fastening the abutment 20 can be inserted thereinside. More specifically, the abutment 12 has an implant fixture insertion part 12a that is an end part of the abutment 12 in a side to be inserted into the inside of the implant fixture 11, and a dental prosthesis insertion part 12b that is an end part of the abutment 12 in a side to be inserted into a hole 22 in the dental prosthesis 21.

As shown in Fig. 3, a detent 13 is provided for the implant fixture insertion part 12a. The detent 13 is engaged with an inside configuration of the implant fixture 11, to prevent the abutment 12 from rotating around the axis.

The implant fixture insertion part 12a side of the abutment 12 is made to be narrower inside its tubular shape. The abutment 12 is configured so that a head 20c of the screw for fastening the abutment 20 is caught in a step formed at this narrower portion.

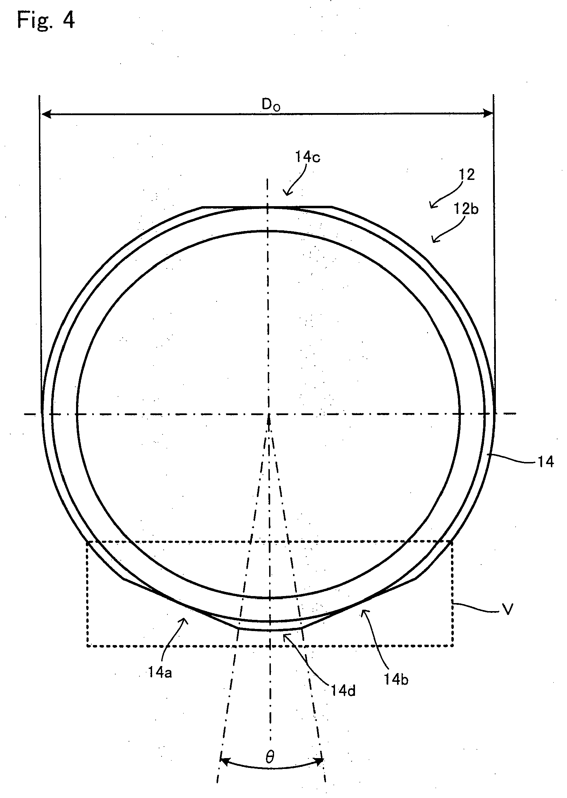

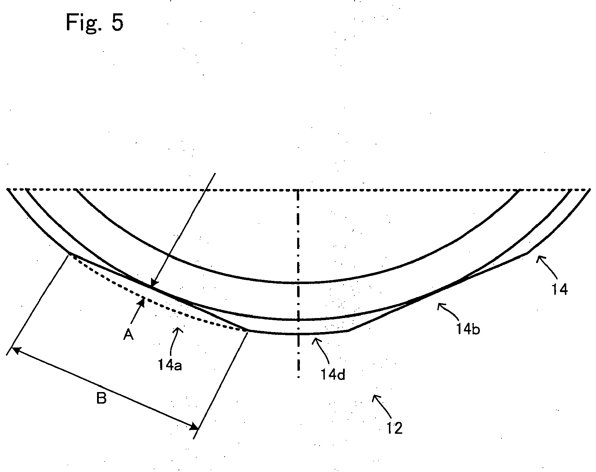

On the other hand, a protrusion 14 that has a shape like a belt is provided for the dental prosthesis insertion part 12b along its outer circumference so as to run around the outer circumference. Fig. 4 is a cross-sectional view of the dental prosthesis insertion part 12b including the protrusion 14 in Fig. 3 taken along the IV-IV line (in a direction orthogonal to the axis). Fig. 5 is an enlarged view focusing on the region shown by V in Fig. 4 including a first cut portion 14a, a second cut portion 14b, and an inter-part 14d.

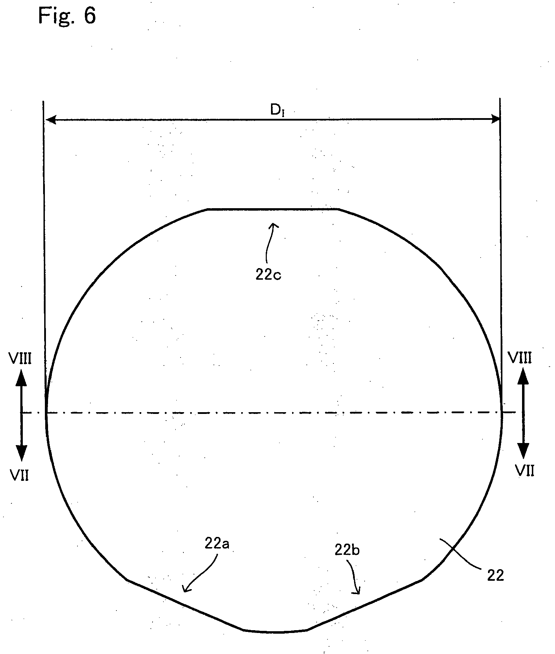

As seen from Fig. 4, the protrusion 14 protrudes like a belt more than the other portions on the outer circumferential face of the dental prosthesis insertion part 12b. The outer diameter (diameter) of the protrusion 14 other than the portion including the first cut portion 14a, the second cut portion 14b, and a third cut portion 14c is Do. The protrusion 14 is configured so that Do is the same as an inside diameter D_{I} of the hole 22 in the dental prosthesis 21 (see Figs. 6 to 8). Therefore, a gap is formed between the portions on the outer circumferential face of the dental prosthesis insertion part 12b other than the protrusion 14 and the inner circumferential face of the hole 22 in the dental prosthesis 21. This gap functions as a gap that is filled with dental adhesive. Thus, the belt-like protrusion also functions as a member forming the gap that is filled with dental adhesive.

The protruding amount of this protrusion 14 is not restricted, but preferably 0.03 mm to 0.1 mm. If the amount is smaller than 0.03 mm, it is difficult to sufficiently fill the gap even with cement of thin coating. If the amount is larger than 0.1 mm, the gap might be too large even for cement of thick coating.

As seen from Figs. 4 and 5, the protrusion 14 has two cut portions that are cut so that their protruding amounts are reduced, that is, the first cut portion 14a and the second cut portion 14b. In this embodiment, the protrusion 14 is configured to further have one more cut portion, that is, the third cut portion 14c.

A configuration to be cut is not limited, but linear cutting is preferable like this embodiment, which makes it easy to form the cut portions.

These first cut portion 14a, second cut portion 14b, and third cut portion 14c are structured so as to be caught on a first protrusion part 22a, second protrusion part 22b, and third protrusion part 22c that are provided for the inner circumferential face of the hole 22 in the dental prosthesis 21. Whereby, these cut portions function as detents for preventing the dental prosthesis 21 from rotating around the axis.

Further, the first cut portion 14a, the second cut portion 14b, and the inter-part 14d formed between the first cut portion 14a and the second cut portion 14b function as adjustment regions to be shaved for being slightly adjusted in size upon fitting into the hole 22 in the dental prosthesis 21. That is, the dental prosthesis insertion part 12b is inserted into the hole 22 in the dental prosthesis 21 while the adjustment regions are shaved so as to have no unsteadiness.

Therefor, the size of the inter-part 14d shown by θ in Fig. 4 is preferably more than 0° and no more than 100° in terms of the central angle on the cross-section. If θ is 0°, the inter-part 14d does not form, which does not establish an adjustment region. If θ is more than 100°, the inter-part 14d is too large, which requires more effort of shaving upon adjustment, and makes a slight adjustment difficult. More preferably, θ is no more than 60°.

The largest depth of the first cut portion 14a and the second cut portion 14b, which is shown by A in Fig. 5, is preferably 0.03 mm to 0.45 mm.

The length of the first cut portion 14a and the second cut portion 14b, which is shown by B in Fig. 5, is preferably 0.5 mm to 2.5 mm.

As described above, in this invention, the detents and the adjustment regions for preventing unsteadiness can be formed by the cut portions, and fitting and prevention of unsteadiness can be adjusted by shaving. Thus, the abutment having detents, where fitting and unsteadiness are easily adjusted, can be achieved.

The description will continue returning to Figs. 1 to 3. The screw for fastening the abutment 20 is a screw for fastening the implant fixture 11 and the abutment 12 as clearly shown in Fig. 2. The screw for fastening the abutment 20 has a screw part 20a, a trunk part 20b, and the head 20c. This screw for fastening the abutment 20 can take the same structure as a known screw for fastening an abutment.

The screw part 20a is a portion where a male screw to be screwed to the female screw 11b formed inside the implant fixture 11 is formed.

The trunk part 20b is a columnar portion without any screw to couple the head 20c to the screw part 20a. The trunk part 20b has the almost same diameter as the screw part 20a.

The head 20c is formed thicker than the screw part 20a and the trunk part 20b. The head 20c is a portion that functions as an operation part for rotating the screw for fastening the abutment 20 using a tool etc. As seen from Fig. 2, using the difference between the head 20c and the trunk part 20b in diameter, the screw for fastening the abutment 20 is engaged, to couple the abutment 12 and the implant fixture 11.

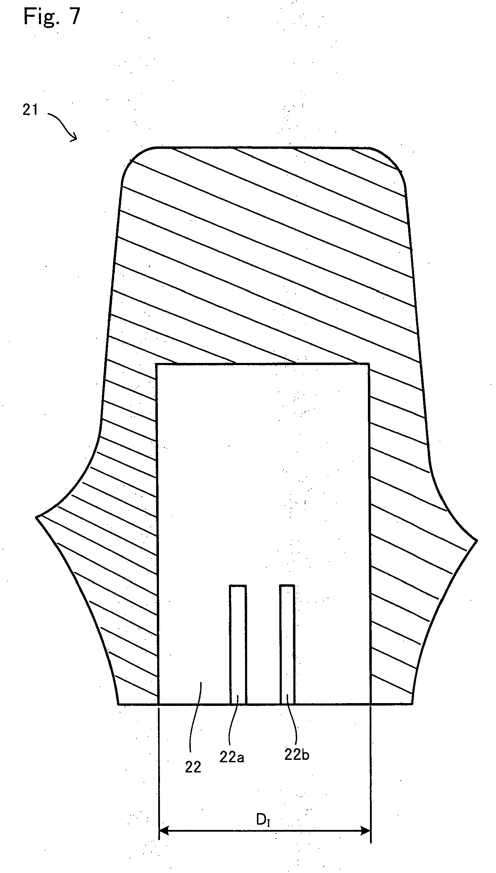

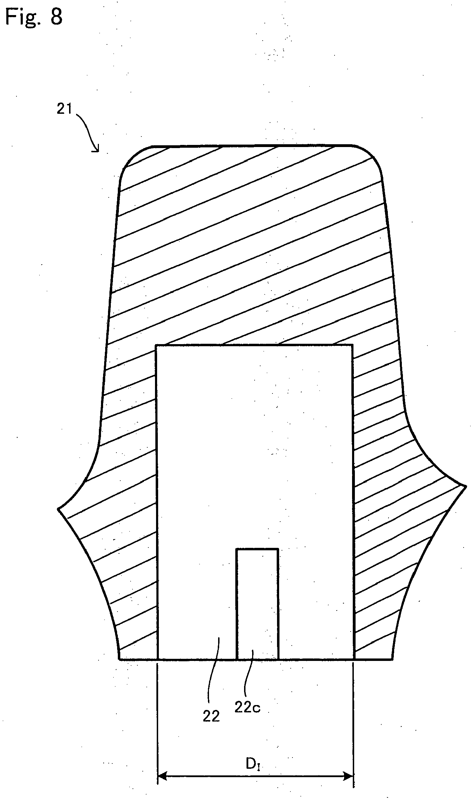

The dental prosthesis 21 is a member with which a false part of a row of teeth is substantially supplemented, such as an artificial crown. The dental prosthesis 21 has a shape copying a tooth, and reproduces the shape and texture of a tooth. In this embodiment, the hole 22 to which the above described dental prosthesis insertion part 12b of the abutment 12 is inserted is provided for the dental prosthesis 21. The protrusion 14 is also inserted inside this hole. Figs. 6 to 8 are explanatory views of the shape of the hole 22. Fig. 6 shows the shape of an opening of the hole 22, Fig. 7 is a cross-sectional view of the dental prosthesis 21 in Fig. 6 taken along the line VII-VII, and Fig. 8 is across-sectional view of the dental prosthesis 21 in Fig. 6 taken along the line VIII-VIII.

As seen from Figs. 6 to 8, the inside diameter (diameter) of the hole 22 other than the portion including the first protrusion part 22a, the second protrusion part 22b, and the third protrusion part 22c is D_{I}. The hole 22 is configured so that D_{I} is the same as the outer diameter Do of the dental prosthesis insertion part 12b of the abutment (see Fig. 4).

As seen from Figs. 6 to 8, the hole 22 has the first protrusion part 22a and the second protrusion part 22b protruding so as to be small in inside diameter on the inner circumferential face thereof In this embodiment, the hole 22 is configured to further have one more protrusion part, that is, the third protrusion part 22c.

These first protrusion part 22a, second protrusion part 22b, and third protrusion part 22c are structured so as to be caught on the first cut portion 14a, second cut portion 14b, and third cut portion 14c, respectively. Whereby, these protrusion parts function as detents for preventing the dental prosthesis 21 from rotating around the axis.

As seen from Figs. 7 and 8, these first protrusion part 22a, second protrusion part 22b, and third protrusion part 22c are provided so as to extend in the direction of the axis to a predetermined range. Whereby, even if the positions of the abutment 12 and the dental prosthesis 21 in the direction of the axis are different, they can be surely engaged therewith.

The dental implant 10 as described above is made up as follows for example.

As shown in Fig. 2, the implant fixture insertion part 12a of the abutment 12 is inserted inside the implant fixture 11 that is embedded under a jaw bone. Then, the screw for fastening the abutment 20 is inserted into the abutment 12 so that the screw part 20a faces the implant fixture 11 side, and the male screw that is formed on the screw part 20a of the screw for fastening the abutment 20 is screwed to the female screw 11b that is formed inside the implant fixture 11 by rotating operation of the head 20c using a tool. At this time, the head 20c of the screw for fastening the abutment 20 is caught in the step of the implant fixture insertion part 12a of the abutment 12, to fasten the abutment 12 and the implant fixture 11.

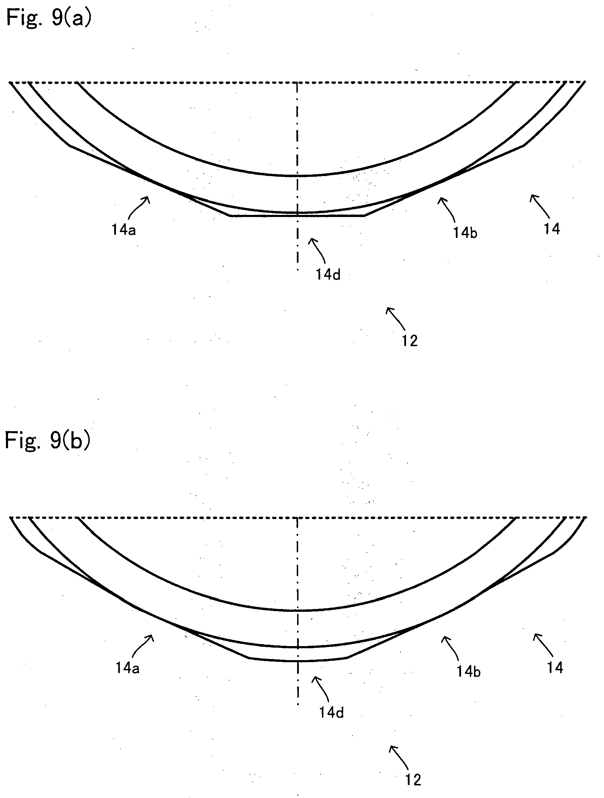

The dental prosthesis insertion part 12b of the abutment 12 is inserted into the hole 22 of the dental prosthesis 21. At this time, adjustment can be carried out by shaving at least one of the first cut portion 14a, the second cut portion 14b, and the inter-part 14d that are formed on the protrusion 14 of the abutment 12 in order to properly insert the dental prosthesis 21 into the abutment 12 without unsteadiness. Fig. 9 shows a scene where such shaving is carried out. Fig. 9(a) shows an example of shaving the inter-part 14d, and Fig. 9(b) shows an example of shaving the first cut portion 14a and the second cut portion 14b so as to enlarge them.

As described above, according to the present invention, unsteadiness can be easily adjusted.

A gap is formed between the inner face of the hole 22 in the dental prosthesis 21 and the outer circumferential face of the abutment 12 (portions other than the belt-like protrusion). Thus, when the dental prosthesis insertion part 12b is inserted into the hole 22 in the dental prosthesis 21 at last, the gap is filled with dental adhesive, to firmly fix the abutment 12 and the dental prosthesis 21.

### Reference Signs List

- 10: dental implant
- 11: implant fixture (artificial tooth root)
- 12: abutment
- 14: protrusion
- 14a: first cut portion
- 14b: second cut portion
- 14c: third cut portion
- 14d: inter-part
- 20: screw for fastening the abutment
- 21: dental prosthesis
- 22: hole
- 22a: first protrusion part
- 22b: second protrusion part
- 22c: third protrusion part

## Claims

1. An abutment that has a tubular shape, one end of which is to be fixed to an implant fixture, and another end of which is to be fixed to a dental prosthesis, wherein
a protrusion that is a belt-like protrusion extending in a circumferential direction is formed around an outer circumference of the abutment in a side to be fixed to the dental prosthesis, and
a cut portion of a smaller protrusion amount is formed on at least each of two regions of the protrusion.

2. The abutment according to claim 1, wherein
a central angle of an inter-part that is a portion between the cut portions adjacent to each other has a size of no more than 100° on a cross-section orthogonal to an axis of the abutment.

3. The abutment according to claim 1 or 2, wherein at least three cut portions are formed.

4. A dental implant comprising:
the abutment according to any of claims 1 to 3; and
a dental prosthesis that has a hole to which the abutment is inserted,
wherein protrusion parts with which the cut portions of the abutment are engaged are provided for the hole.
